# EUROPEAN PATENT SPECIFICATION

(11) **EP 1 019 895 B1**
(45) Date of publication and mention of the grant of the patent: **24.11.2004**
(21) Application number: 97931065.3
(22) Date of filing: 10.06.1997
(51) Int. Cl.: G09G 5/00, G06F 3/023

(54) **UNIVERSAL INPUT DEVICE AND SYSTEM**
UNIVERSALE EINGABEVORRICHTUNG UND SYSTEM
DISPOSITIF UNIVERSEL DE SAISIE ET SYSTEME DE SAISIE

(30) Priority: 10.06.1996 US 660944
(43) Date of publication of application: 19.07.2000
(73) Proprietor: Vayda, Mark, McLean, VA 22101 (US); Weyl, Nancy, McLean, VA 22101 (US)
(72) Inventor: Vayda, Mark, McLean, VA 22101 (US); Weyl, Nancy, McLean, VA 22101 (US)
(74) Representative: Beck, Simon Antony
(86) International application number: PCT/US1997/009845
(87) International publication number: WO 1997/048066

(56) References cited:
- EP-A- 0 427 036
- EP-A- 0 538 020
- EP-A- 0 689 122
- WO-A-94/28479
- DE-A- 370 749
- DE-A- 4 038 012
- DE-C- 370 749
- GB-A- 2 131 746
- US-A- 4 458 238
- US-A- 4 580 006
- US-A- 4 870 389
- US-A- 4 917 516
- US-A- 5 270 709
- US-A- 5 302 969
- US-A- 5 432 530
- US-A- 5 436 640
- US-A- 5 473 325
- US-A- 5 543 818
- JOHNSON B ET AL: "CYCLOPS A ONE BUTTON ALPHA-NUMERIC KEYPAD" MOTOROLA TECHNICAL DEVELOPMENTS,US,MOTOROLA INC. SCHAUMBURG, ILLINOIS, vol. 15, 1 May 1992 (1992-05-01), pages 49-56, XP000306143

## Description

### FIELD OF THE INVENTION

The present invention relates to input devices and particularly to input devices for use with computer systems. More particularly, the present invention relates to a universal input device for inputting data into a computer system and other input receiving systems.

### BACKGROUND OF THE INVENTION

From the development of the typewriter to the present day personal computer, one single type of input format has been used. The typewriter QWERTY arrangement of keys has been augmented for the computer with various other keys such as the ESCAPE key, function keys, directional keys, number pad keys, etc. In all, most keyboards for use with modem personal computers comprise over 50 different keys. Although many other keys may be desirable for the expert user, additional keys require additional space which would require larger and larger keyboards, a prospect which is not aesthetically or functionally practical.

Additionally, use of the keyboard as the sole input device limits the effectiveness of the computer for performing word processing and graphics functions, particularly as software for performing these functions becomes increasingly sophisticated. As such, secondary input devices, such as a mouse, were developed to assist the user in placing and relocating a cursor or other locational device in these software packages. The combination of the keyboard and mouse enables a wider variety of inputs and control by a user. The increasing number of options, however, also results in greater complexity for the user in being able to operate and utilize these options.

This problem is additionally compounded by the increasing necessity to be able to use computers for accessing information, operating a business, ordering products, etc. Many people have never learned the QWERTY keyboard system, what the function keys do or how a mouse works. For these people, the prospect of learning to use 50-plus keys on a keyboard in addition to a mouse is daunting, particularly because of the increasing complexity of those devices.

Learning the use of the keyboard requires familiarity with the QWERTY ordering system. Moreover, the keyboard arrangement requires a user to develop dexterity with his or her fingers to be able to effectively and efficiently reach and depress each key on the keyboard. With ten fingers and over 50 keys, movement of the hands and fingers across a keyboard requires skill and practice. Often, a user must look at the keyboard to remember the location of less often keys such as the} key or the - key on a keyboard, for example. Moreover, because a user must move fingers from the "home" positions to depress other keys, mistakes in replacing the fingers on the proper keys are common.

Also, the addition of the mouse requires the user to often look down to locate the mouse or to replace his or her hand on the keyboard after use of the mouse. This requires the user to divert his or her eyes from the screen to place his or her hand or to locate a particular key and then to refocus his or her eyes on the proper location on the screen. In complicated software packages, relocating the proper place on the screen may be difficult and needlessly consume time which could more effectively be spent operating the software.

US 5270709 (which is equivalent to EP 0427036 and referred to as D1 in the examination report) discloses a keyboard unit comprising a knob like headpiece 55, finger keys 60 to 63 and thumb keys 64 and 65. The knob 55 is guided by guiding elements along the surface of a supporting element 42. The knob 55 may be shifted in two co-ordinate directions relative to the supporting element. Once the knob has been moved to a desired position one of the keys is pressed to seal a signal based on the position of the knob and the key selected.

GB 2131746 discloses an input device comprising a key pad that is manually movable between a central position, a leftwards position and a rightwards position to select and enable groups of legends that are displaced on a cathode ray tube, or a similar device, such that actuation of a key associated with one of the legends enabled will generate signals indicative of the particular symbol activated.

According to a first aspect of the present invention there is provided an input device for generating signals indicating input requests by a user, the device comprising:
a base portion (40);
a control portion (38);
a plurality of input means (46) disposed on said control portion (38) for permitting a user to input a request;
a universal connection means (54) for connecting said control portion to said base portion and for permitting a user to move said control portion universally with respect to the base portion;
   and
a signal generating means, operatively connected to the plurality of input means and the universal connection means, for generating a first plurality of signals indicating a position of the control portion and for generating a second plurality of signals indicating user data input requests; and the input device further characterised by
an input selection mechanism for permitting a user to operate said input device in a character selection mode or a cursor movement mode.

According to a second aspect of the present invention there is provided a computer system having an input device according to the first aspect of the present invention.

Accordingly, one embodiment of the present invention comprises a computer system comprising a plurality of input devices and a processor. Each input device comprises a base portion, a control portion, a plurality of input keys disposed on the control portion for permitting a user to request a data input to the processor, a universal connector for connecting the control portion to the base portion and permitting the user to move the control portion universally with respect to the base portion through a plurality of first and second discrete positions in the first and second directions, and a signal generator for generating signals indicating the first and second discrete position of the control portion and user data input requests. The processor receives and processes the data input requests and positional signals. A display displays an image generated by the processor. A character selector unit presents a character presentation graphic on the display. The character presentation graphic comprises a plurality of rows and a plurality of vertical clusters, each row and each vertical cluster comprising no more than five character selection icons, wherein each first discrete position corresponds to a row and each second discrete position corresponds to a vertical cluster and wherein the character selector unit selects and performs a function associated with the character selection icon corresponding to the first and second discrete positions of the control portion and the input key causing the user input data request. A rotational mechanism permits a user to rotate the control portion with respect to the base portion.

These and other advantages and objects may be appreciated from the present specification and drawings.

### BRIEF DESCRIPTION OF THE DRAWINGS

Fig. 1 depicts one embodiment of a computer system according to the present invention.
Fig. 2 depicts a block diagram of an embodiment of a computer system according to the present invention.
Fig. 3 depicts a perspective view of a universal input device according to an embodiment of the present invention.
Fig. 4 depicts an overhead view of a portion of a universal input device according to an embodiment of the present invention.
Fig. 5 depicts a cross-sectional view of the portion depicted in Fig. 4 taken along the line A-A.
Fig. 6 depicts a cross-sectional view of the universal input device of Fig. 3 taken along line B-B of Fig. 4.
Fig. 7 depicts a character selection graphic according to an embodiment of the present invention.
Fig. 8 depicts a flow diagram for operation of a computer system according to an embodiment of the present invention.
Fig. 9 depicts a perspective view of a universal input device according to another embodiment of the present invention.
Fig. 10 depicts a cross-sectional view of a universal input device according to yet another embodiment of the present invention.
Fig. 11 depicts an overhead view of a universal input device according to another embodiment of the present invention.
Fig. 12 depicts an under side view of a universal input device according to another embodiment of the present invention.
Fig. 13 depicts an overhead view of a universal input device system according to an embodiment of the present invention.
Fig. 14 depicts an overhead view of a universal input device system according to another embodiment of the present invention.
Fig. 15 depicts a cross-sectional view of a universal input device according to yet another embodiment of the present invention.
Fig. 16 depicts an overhead view of a universal input device system according to an embodiment of the present invention.
Fig. 17 depicts a perspective view of a universal input device according to another embodiment of the present invention.
Fig. 18a depicts a top view of a slider according to one embodiment of the present invention.
Fig. 18b depicts a top view of a slider according to another embodiment of the present invention.
Fig. 18c depicts a top view of a slider according to another embodiment of the persent invention.
Fig. 19 depicts a perspective view of a universal input device according to another embodiment of the present invention.
Fig. 20 depicts a side view of a universal input device according to another embodiment of the present invention.
Fig. 21 depicts a two-dimensional command matrix according to one embodiment of the present invention.
Fig. 22 depicts a three-dimensional command matrix according to another embodiment of the present invention.

### DETAILED DESCRIPTION OF THE PREFERRED EMBODIMENTS

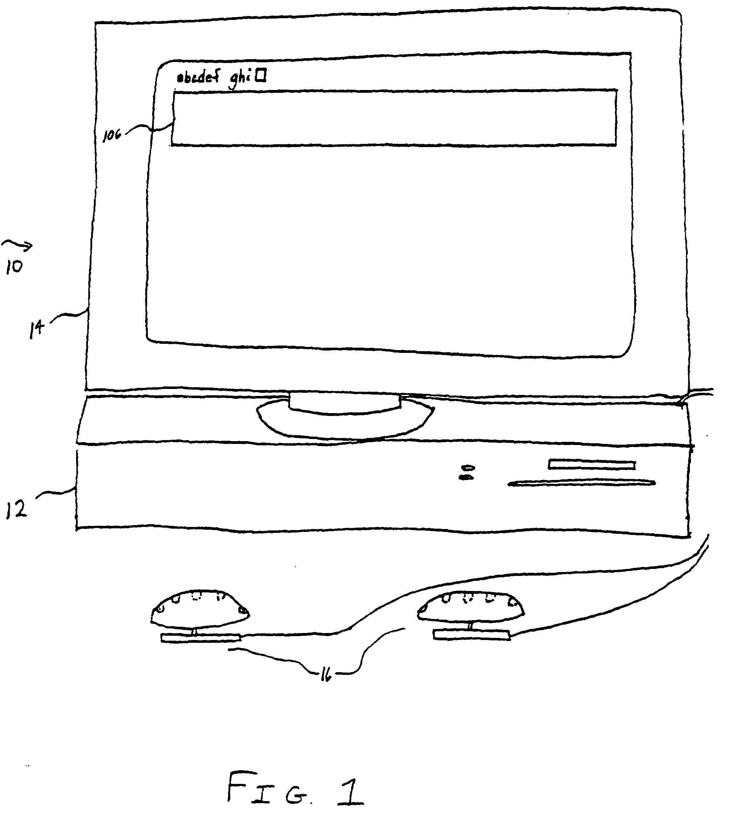

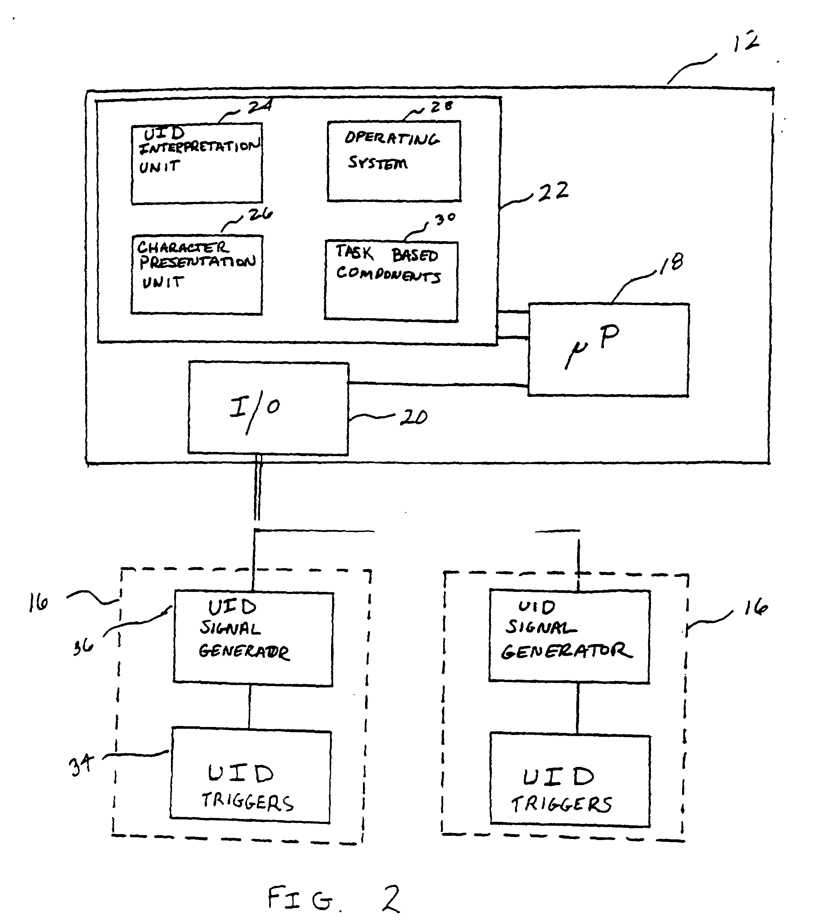

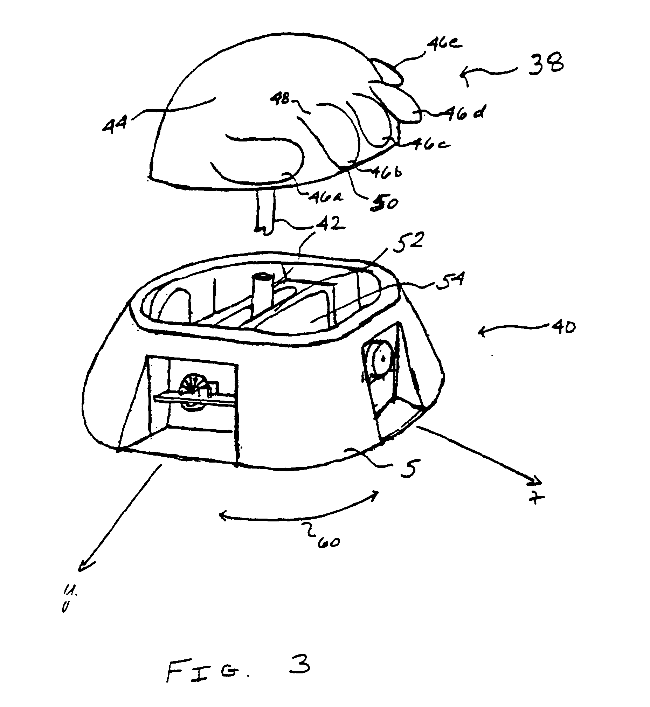

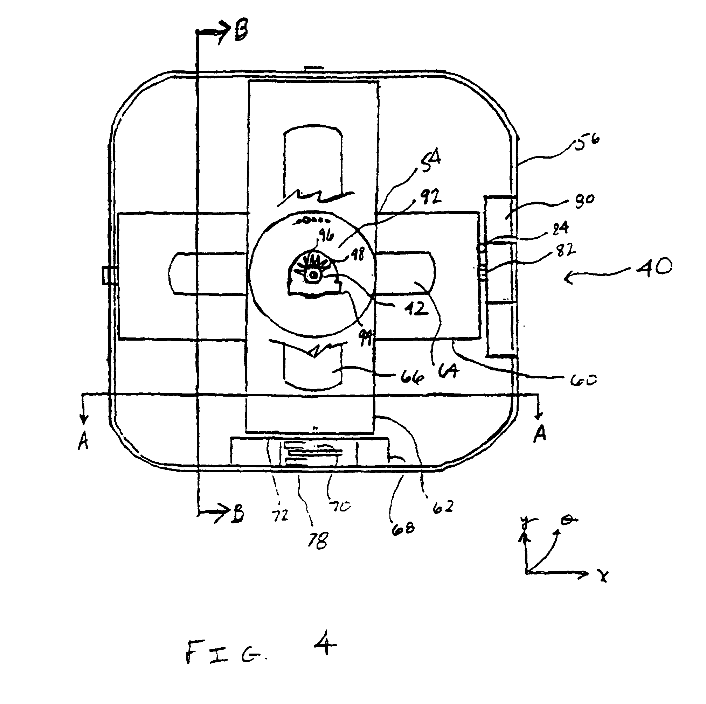

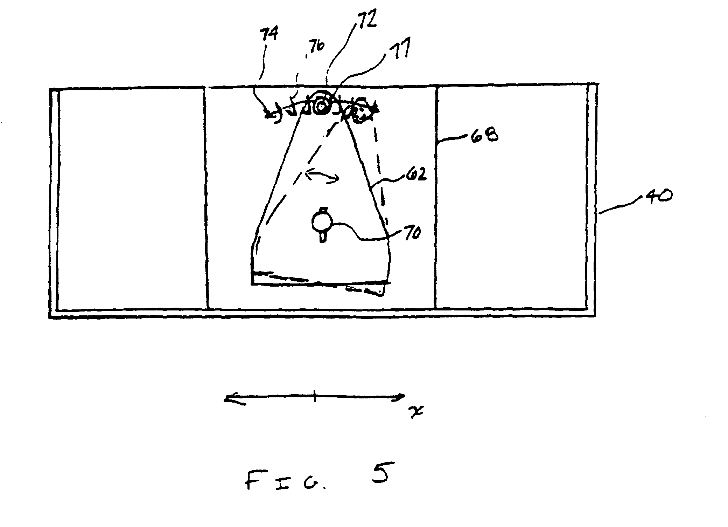

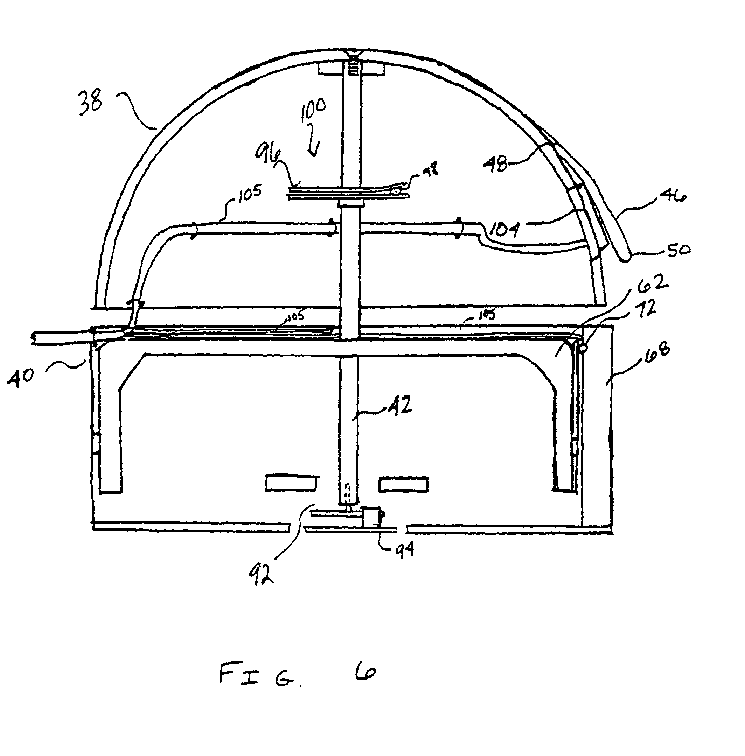

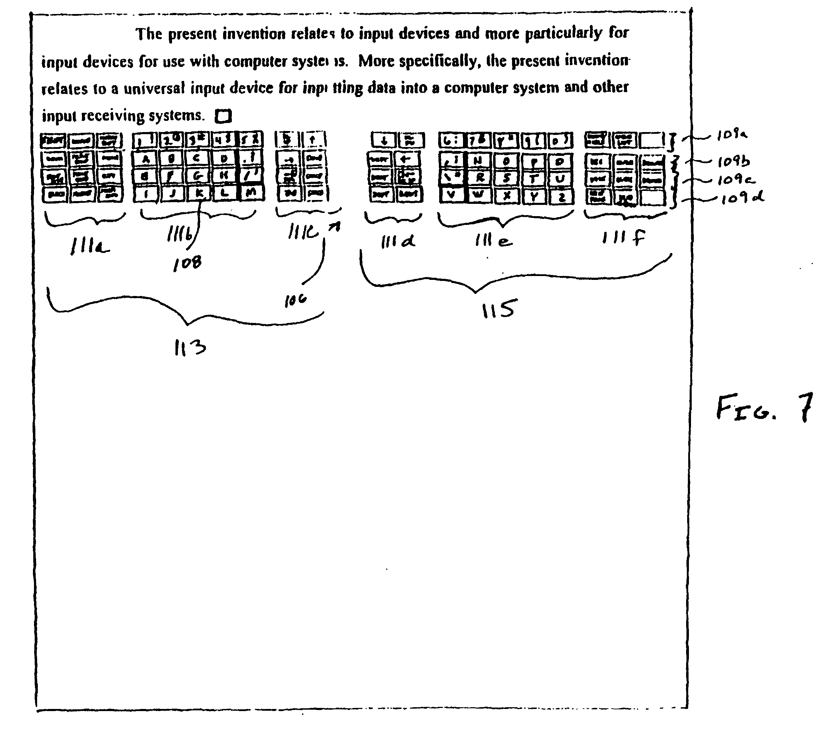

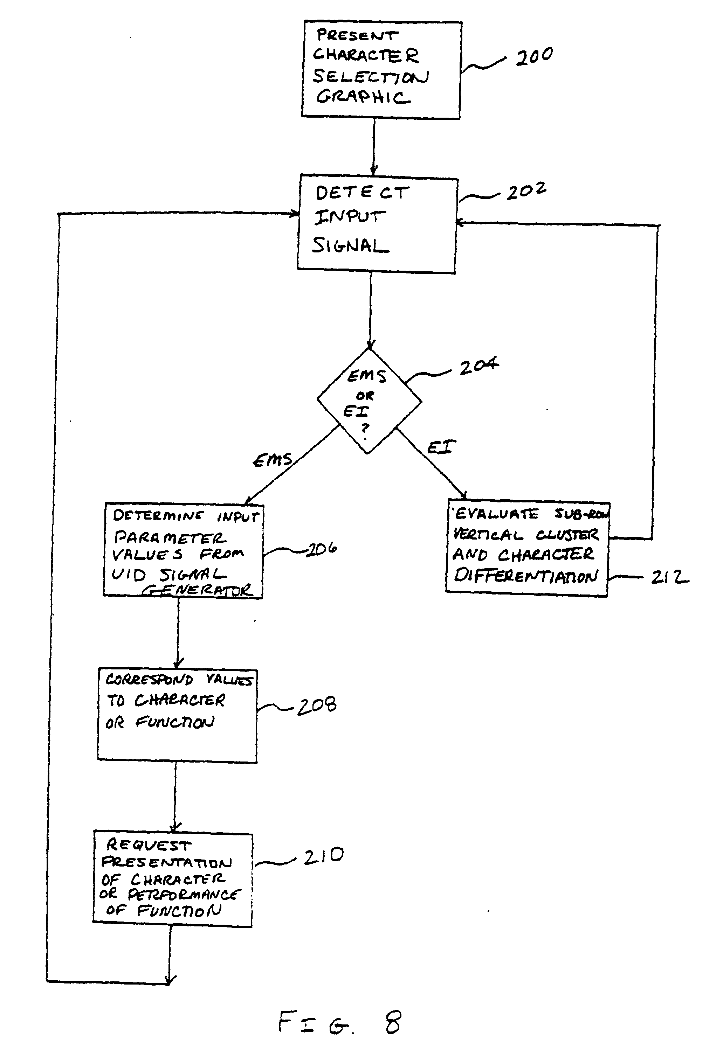

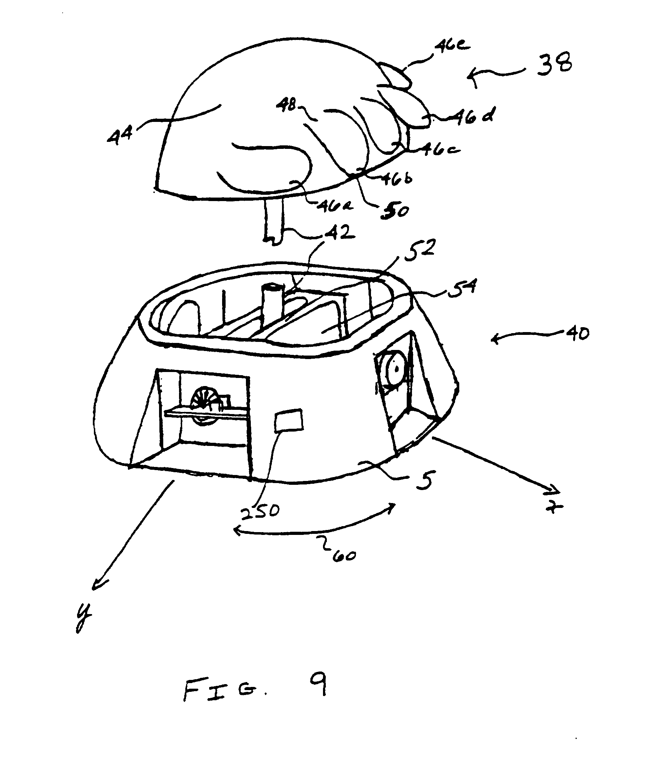

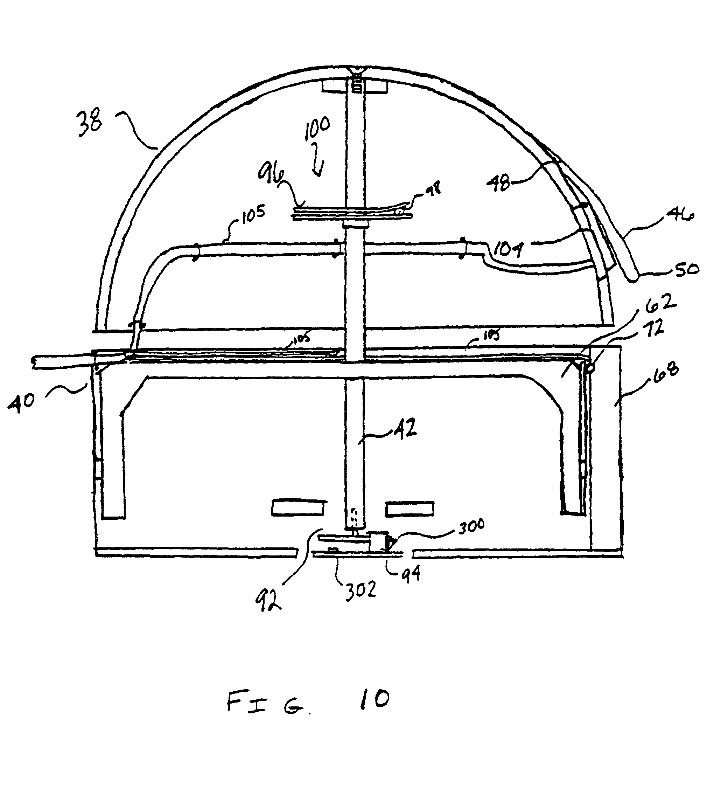

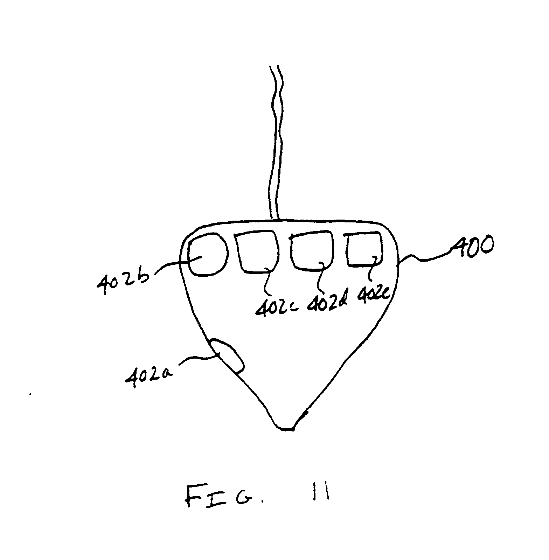

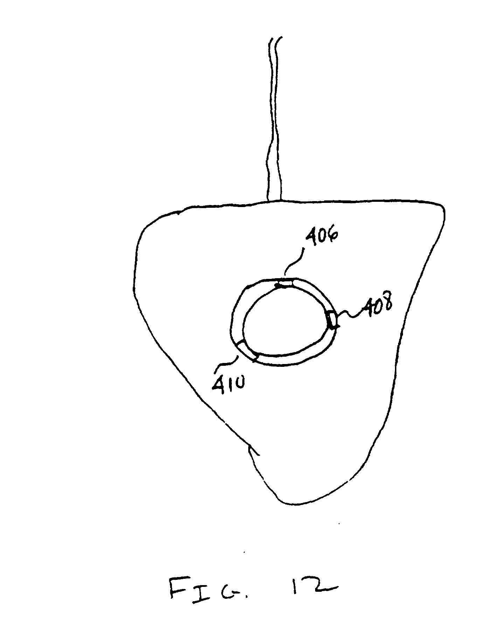

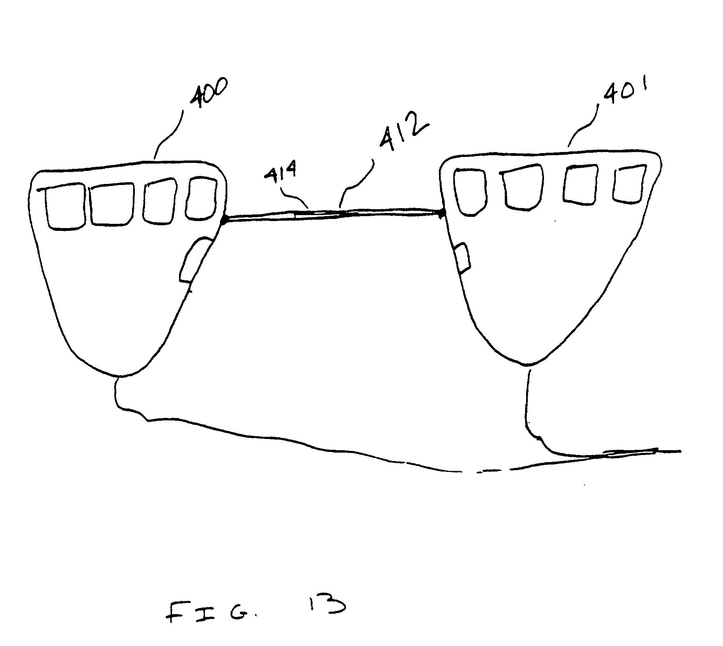

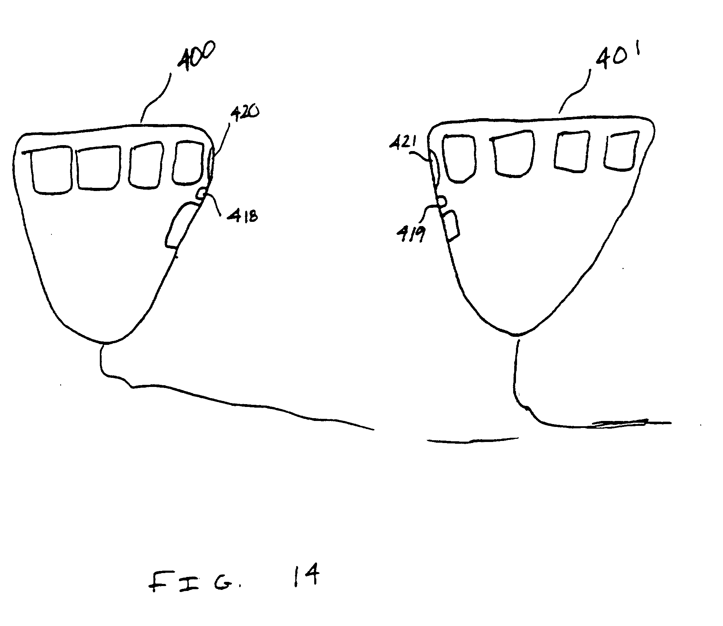

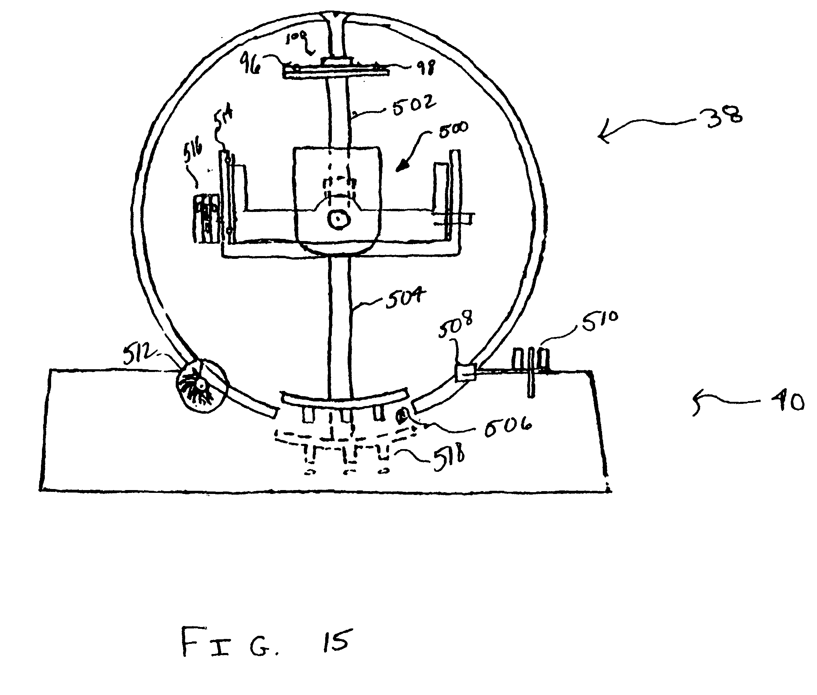

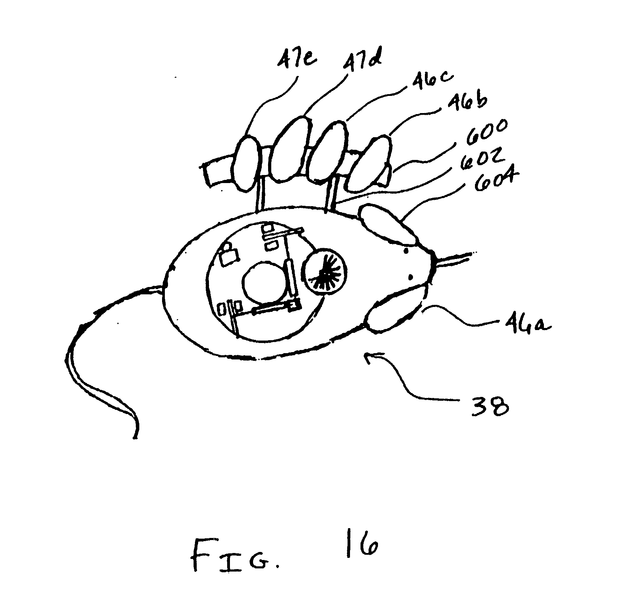

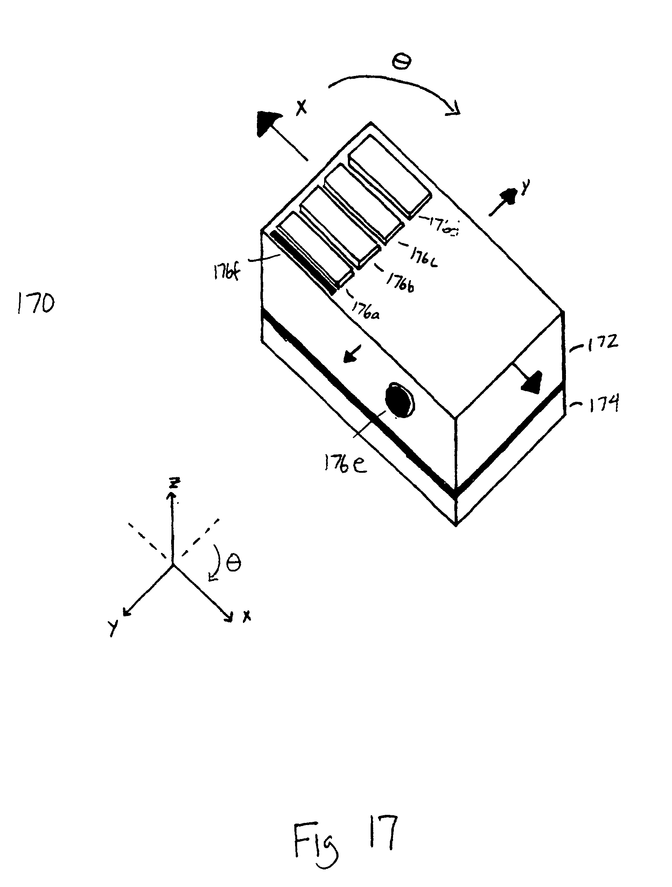

According to the present invention, a universal input device is provided for use with a computer system. Fig. 1 depicts one embodiment of a computer system 10 according to the present invention. Computer system 10 comprises a computer 12, a monitor 14 and one or more universal input devices (UIDs) 16. Computer 12 may comprise any type of computer including personal computers, supercomputers, mainframe computers, etc. which require data to be input from a user. For example, computer 12 may comprise a personal computer utilizing a microprocessor sold under the trademark (PENTIUM) by Intel, Inc.

Monitor 14 may comprise any display device for use with computer 12 including an LED display, an LCD display, or the like. Monitor 14 is connected to computer 12, for example, by a standard cable.

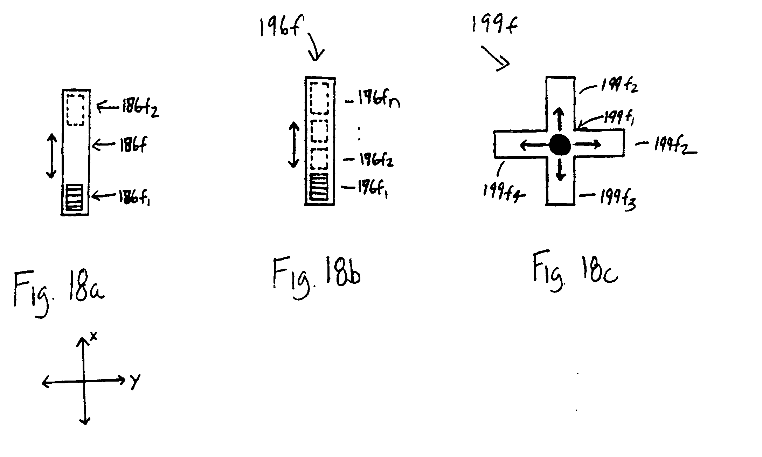

As depicted in the block diagram of Fig. 2, computer 12 comprises a microprocessor 18, an input/output device 20, and a memory device 22. Memory device 22 stores a UID interpretation unit 24, a character presentation unit 26, an operating system 28, and task based software components 30. UID interpretation unit 24 provides instructions which interpret signals received from UIDs 16 for operating system 28. UID interpretation unit 24 functions similarly to software for interpreting mouse movements, or movements of a joystick, for example. Character presentation unit 26 operates to present on monitor 14 a character selection graphic 106 as depicted in Fig. 1.

Character selection graphic 106 comprises a visual representation of a set of characters or functions which may be selected by the user. Character selection graphic 106 is preferably overset onto a document or window presented by one of the task based components 30. For example, a task based component 30 may comprise a word processing component which displays a document which is being edited. Character selection graphic 106 may be presented slightly below or slightly above the line containing the current cursor location as depicted in Fig. 1, for example. The functioning of character selection graphic 106 and UID 16 is discussed in more detail below.

UID 16 comprises UID triggers 34 and UID signal generator 36. UID triggers 34 comprise electromechanical devices which translate mechanical actions into electrical signals for relay to UID signal generator 36. UID signal generator 36 receives the electrical signals from UID triggers 34 and generators signals indicative of the signals received from UID triggers 34. These signals are transmitted to I/O device 20 in computer 12 for relay to microprocessor 22. Having described the functional connection of several components of computer system 10, a more detailed description of UID 16 and character selection graphic 106 illustrates the operation of the present invention.

UIDs 16 provide an easy to learn and operate input device which may be used to input an almost infinite amount of data without requiring the user to move his fingers from predesignated positions. As represented in Fig. 3, UIDs 16 comprise a control portion 38 and a base portion 40. Control portion 38 may be connected to base portion 40 by a shaft mechanism 42, for example. Although each UID 16 is depicted as being connected to a single base portion 40, a plurality of control portions 38 may be connected to a single base portion. Other variations are also possible.

Control portion 38 comprises a palm portion 44 and a plurality of finger positions 46. In a preferred embodiment, control portion 38 comprises five finger portions 46a-e, one finger portion for each finger of a users hand. As depicted in Fig. 3 (for a left hand), finger portion 46a may be slightly spaced from finger portions 46b-e for a user's thumb. Preferably, finger portions 46a-e and palm portion 44 are arranged to provide an ergonomically pleasing arrangement. For example, preferably finger portions 46a-e are spaced such that a user's hand rests comfortably on palm portion 44 while his fingers (thumb, index, middle, ring, and little) rest comfortable over finger portions 46a-e, respectively. For a right hand, finger portions 46a-e may be arranged oppositely.

Each of finger portions 46 may be connected to palm portion 44 to operate as a switching device. For example, finger portion 46 may comprise a connecting end 48 and a depressing end 50. Connecting end 48 may be disposed toward palm portion 44, whereas depressing end 50 may be slightly displaced from palm portion 44. For example, connecting end 48 may be hingedly connected to palm portion 44.

Depressing end 50 is preferably connected to an electromechanical switch (not shown). The electromechanical switch may be any type of contact switch which generates an electrical impulse. In one preferred embodiment, a two lead contact switch may be used in which one lead may be connected to palm portion 44 and the other lead may be connected to an underside of depressing end 50 such that upon depression of depressing end 50 by a user, the two leads are brought into contact and thus the electromechanical switch may generate an impulse. Each finger portions 46a-e comprises an electromechanical switch (see Fig. 6) and these switches comprise five of the electromechanical triggers of UID triggers 34.

Finger portions 46 may also be keyboard keys. In another preferred embodiment, finger portions 46 are long keyboard keys, such as a typical "SHIFT" key on the right-hand side of a typical keyboard, that are arranged such that the keys extend in the same direction as fingers on a hand. Other keys may also be used.

Base portion 40 comprises a universal connection component 54 and a housing 56. Housing 56 serves to support universal connection component 54. In one embodiment, universal connection component 54 comprises a shaft receiving component 52 which receives shaft 42. Therefore, control portion 38 is connected to universal connection component 54. Universal connection component 54 allows a user to move control portion 38 in the x-direction and y-direction relative to housing 56 as depicted in Fig. 3. Additionally, universal connection component 54 may comprise a rotational component 58 which enables a user to move control portion 38 rotationally along a path 60 with respect to housing 56.

In a preferred embodiment, universal connection component 54 permits movement of control portion 38 with respect to housing 56 through distinct positions. In a preferred embodiment, for example, control portion 38 may be moved in a positive x-direction five positions and in a negative x-direction five positions, thus providing eleven distinct positions along the x-directional axis. Similarly, in a preferred embodiment, for example, control portion 38 may be moved in a positive y-direction five positions and in a negative y-direction five positions, thus providing eleven distinct positions along the y-directional axis. Also, in a preferred embodiment, for example, control portion 38 may be rotated five positions in either direction along pathway 60 for a total of eleven rotational positions along pathway 60.

The distinct positions may be provided in a preferred embodiment, for example, by using a spring steel holding a ball bearing which may be rotated into specified indent portions along a pathway. Other methods of providing distinct positions may also be used. The positions are preferably distinct enough such that a user may sense the various positions. This better enables a user to operate UID 16.

At each of the distinct positions in each of the directions (x, y and along pathway 60), universal connection component 54 comprises a sensing device which provides an electrical impulse indicating movement into the distinct position. These sensing devices comprise UID triggers 34.

In the preferred embodiment described above, there are eleven sensing devices for each of the directions, thus in total 33 sensing devices may be provided as UID triggers 34.

In another embodiment, potentiometers may be employed with universal connection component 54 for indicating relative movement of control portion 38 with respect to housing 56.

Fig. 4 depicts an overhead view of base portion 40. Universal connection component 54 may comprise a gimbal mechanism, for example. In this embodiment, the gimbal mechanism may comprise a first cross portion 60 and a second cross portion 62. Each of the cross portions comprise a slot 64 and 66 respectively for permitting shaft 42 to pass through a portion of the cross portion and to be moved along the major axis of the cross portion. For example, first cross portion 60 may be disposed along the x-axis and comprises slot 64. When a user moves control portion 38 (and thus shaft 42 which is attached thereto) in the x-direction, shaft 42 passes along slot 64 without restraint by any portion of first cross portion 60. At the same time, however, shaft 42, when moved in the y-direction, abuts a side wall of slot 66 of second cross portion 62. Therefore, as shaft 42 moves in the y-direction, second cross portion 62 also rotates about its axis in the y-direction.

The rotation of second cross portion 62 may be described in greater detail with respect to Fig. 5. Fig. 5 depicts a view taken along A-A of Fig. 4. Second cross portion 62 connects to a spring housing 68 via an axis 70. Second cross portion 64 and spring housing 70 are separated by a ball bearing 72 which rotates with second cross portion 62 along a bearing pathway 74. Bearing pathway 74 comprises a plurality of indents 76 on either second cross portion 62 or spring housing 70. Spring housing 70 houses a spring mechanism 78 which operates to resist movement of second cross portion 62 from its vertical position. Upon release of control portion 38 by the user, spring mechanism 78 operates to return second cross portion 62 to a vertical position as depicted in Fig. 5. Any type of spring mechanism 78 may be used to perform this function such as a steel spring, for example.

First cross portion 60 operates similarly to movement of shaft 42 along the y-axis. First cross portion 60 connects to a spring housing 80 via an axis 82 separated by a ball bearing 84 along a bearing pathway 86. Bearing pathway 86 comprises a plurality of indents 88 on either first cross portion 90 or spring housing 80.

In a preferred embodiment, indents 76 and 88 are placed along bearing pathway 74 and 86 respectively about 10 degrees apart such that all eleven indents (in a preferred embodiment), representing a position for control portion 38, may be within thirty degrees of the predesignated starting position 77. Alternatively, other degrees of separation of indents 76 and 88 may be provided according to comfort of users' hands, wrists and arms when moving control portion 38 through these positions. For example, it may be determined that 2 degrees of separation may be desired or thirty degrees of separation. Moreover, the degree of separation may depend upon the skill level of the user or the number of positions that are being provided. If many positions are provided, it may be desirable to space indents 76 more closely so the total degree of separation from predesignated starting position 77 may not exceed a predetermined amount, such as about 90 degrees or 60 degrees, for example.

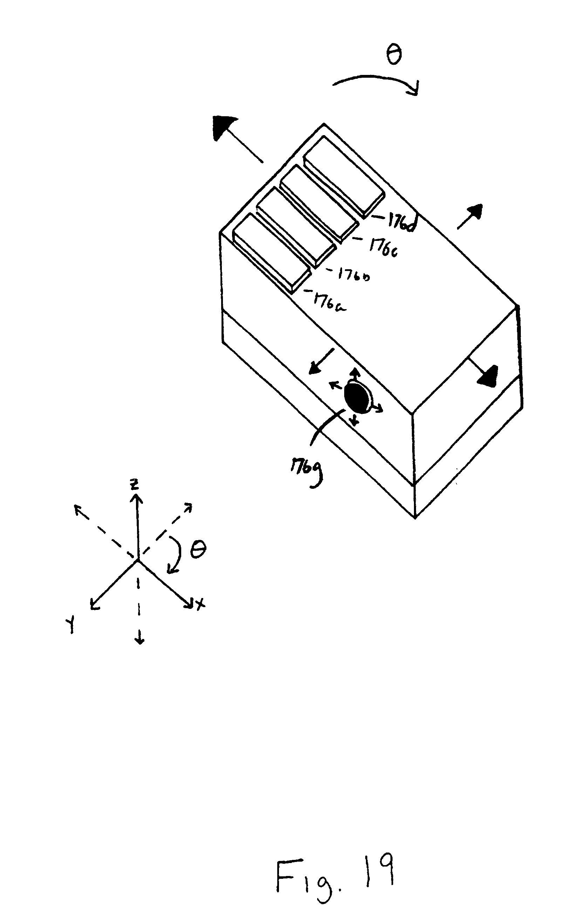

Universal connection mechanism 54 may also comprise a track ball mechanism, for example, as described with reference to Fig. 12. Other universal connection devices may also be used which permit movement through at least two directions and through a plurality of positions (preferably discrete positions).

In another embodiment, base portion 40 may also comprise a rotational mechanism 92 (depicted in a cut-out portion of Fig. 4). Rotational mechanism 92 operates to permit rotational movement of control mechanism 38 with respect to base portion 40 (i.e. along an arc θ). Rotational mechanism 92 comprises a support portion 94 and a spring portion 96 which operate to provide resistance to movement of shaft 42 in a rotational direction,. A plurality of indents 98 are provided as shaft 42 is rotated along arc θ. In a preferred embodiment, eleven total indents are provided.

Fig. 6 depicts UID 16 (including control portion 38) taken along line B-B. As depicted in Fig. 6, in connection with rotational mechanism 92, a ball bearing-spring device 100 may be provided. Ball bearing-spring device 100 may provide a plurality of indents 98. At each of the indents of UID 16, an electrical indicator 102 may be provided. These electrical indicators 102 connect to UID signal generator 16 via wires 105, for example. Electrical indicators 102 provided at each of the positions along the x-direction, y-direction and arc θ comprise UID triggers 34 which sense movement of control portion 38 into the positions and signal that movement to UID signal generator 36. UID signal generator 36 then signals computer 12 of this movement for further processing. In that regard, UID 16 may operate like a joystick, for example, by signaling movement of the control portion 38.

As further depicted in Fig. 6, each finger portion 46 comprises an electromechanical switch mechanism 104 (comprising UID triggers 34) which may be connected by wires 105 to UID signal generator 36. Therefore, UIDs 16 provide for movement in three dimensions through a plurality of distinct positions with UID triggers 34 to detect movement through these positions as well as depression of the finger portions 46. In a preferred embodiment, eleven positions are provided in the x-direction, the y-direction, and along arc θ, each of which may be sensed by the UID triggers 34 and indicated to computer 12. Additional or fewer positions may be provided as desired to meet the conditions for which the UIDs are used. UIDs 16 operate as an input device through depression of finger portions 46a-e and/or movement of control portion 38 through one of the distinct positions. Wires 105 may also be provided to connect to electrical indicators 102 which comprise the other UID triggers 34.

In a preferred embodiment, five pairs of wires are provided for each of the five finger portions. Also, three sets of four wires are provided for the electrical indicators 102 (one set for each electrical indicator). These wires may then be packaged in a single sheath extending from housing 56 to UID signal generator 34. Alternatively, UID signal generator 34 may be disposed within housing 56. UID signal generator 34 may then be connected to computer 12 through a standard wire and input device connector arrangement. Electrical indicators 102 may communicate with UID signal generator 34 using wireless technology such as RF, microwave, and the like.

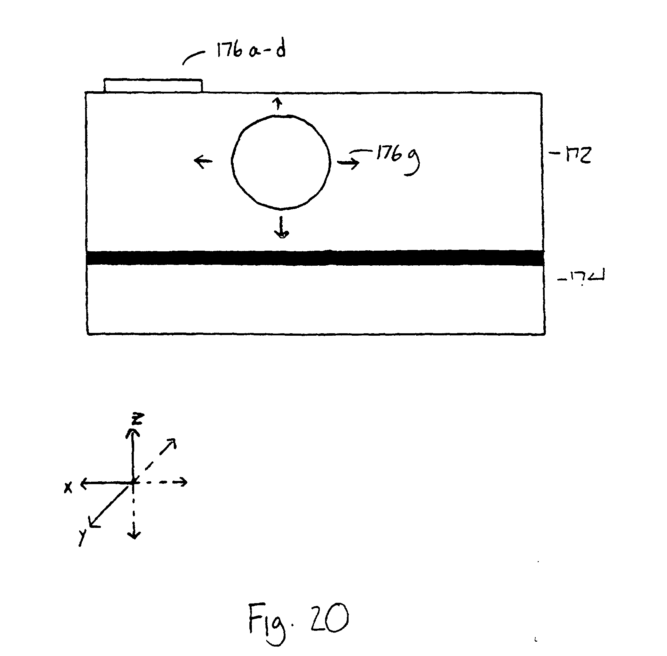

In another embodiment, UID 16 may comprise a track ball mechanism for universal connection mechanism 54. Fig. 15 depicts an UID 16 having such a mechanism according to one embodiment of the present invention. In this embodiment, control portion 38 comprises a sphere, e.g., track ball. For example, a 10 cm (four inch) in diameter plastic sphere may be used as the outer shell for control portion 38. A two piece rod 502/504 connected control portion 38 to base portion 54. Disposed between upper rod 502 and lower rod 504 is gimbal mechanism 500. Gimbal mechanism 500 may operate similarly to the gimbal mechanism depicted and described with respect to Fig. 4. Lower rod 504 supports gimbal mechanism 500 and is mounted on removable plate 506 disposed in the bottom of control portion 38. A plurality of detect devices 514 may be provided in gimbal mechanism 500 for indicating relative movement of control portion 38 with respect to base 40. Electronic readers 516 may be provided in connection with detect devices 514. Other electronic readers 510 and 512 may also be disposed on base portion 40. These readers may detect the universal movement of the spheric control portion through the base portion 40. Plate 506 may be depressed into and lifted out of a recess portion 518 to activate or deactive rotational mechanism 100. As such, a track ball mechanism is provided which "hides" the inner workings of the UID and provides an alternative control portion 38 format.

UID 16 may be used to operate a multitude of devices for receiving input. For example, UID 16 may be used to operate computer software, mechanical devices such as vehicles, communications equipment, interactive television equipment, audio equipment, or the like. UID 16 may be operated for use for any system in which a keyboard, mouse, or joystick previously were utilized. For purposes of illustration, however, UID 16 may be used in a system according to another embodiment of the present invention.

As depicted in Figs. 1 and 2, for example, two UIDs 16 may be in communication with computer 12. As depicted, these UIDs 16 may be connected by wiring. Also, wireless communication between the UIDs and computer 12 may also be used. For example, RF, microwave, and other wireless communication techniques may be used.

Moreover, computer 12 may comprise a memory 22 which contains an UID interpretation unit 24. According to one embodiment of the present invention, UID interpretation unit 24 may receive signals from UID signal generator 36 via I/O device 20 and microprocessor 18. UID interpretation unit 24 operates to generate instructions from the signals and provides those instructions for operating system 28 and task based components 30.

Memory 24 also stores a character presentation unit 26. Character presentation unit 26 operates to present a character selection graphic 106 on display 14 of system 10. In a preferred embodiment, character presentation unit 26 displays a plurality of characters in an arrangement corresponding to the arrangement of finger portions 46 of UID 16. For example, in a preferred embodiment, character selection graphic 106 may depict at least ten columns of characters, one column corresponding to each of the ten finger portions (from the two UIDs 16). Additionally, multiple rows, additional columns and additional features may be presented.

For example, Fig. 7 depicts one embodiment of a character selection graphic 106. Character selection graphic 106 comprises a plurality of character selection icons 108. Character selection icons 108 may be arranged in a plurality of rows 109a-d and a plurality of vertical clusters 111a-f. As depicted in Fig. 7, character selection graphic 106 may be presented below the currently active cursor position. As the user continues to input characters, character selection graphic 106 may scroll down the screen so that it is always depicted above the current cursor position. Alternatively, the currently active cursor position may scroll through character selection graphic 106.

In a preferred embodiment, one of the rows of character selection graphic 106 comprises a home row, for example row 109c. The home row corresponds to a predesignated starting position for control portion 38 of each of the UIDs 16. For example, the predesignated starting position for control portion 38 may be such that control portion 38 is in its natural position as connected to universal connection mechanism 54. Other rows may correspond to other positions of control portion 38 with respect to base portion 40. For example, row 109b may correspond to one position up in the x-direction. Row 109a may correspond to two positions up in the x-direction. Row 109d may correspond to one position back in the negative x-direction. In a preferred embodiment, UIDs 16 may be moved through five positions in the x-direction and five positions in the negative x-direction. Therefore, eleven rows may be provided in character selection graphic 106. Alternatively, as depicted in Fig. 7, only four rows may be provided. Other arrangements of rows may also be used.

Preferably each row may be divided into a left sub-row 113 and a right sub-row 115. The character selections icons 108 for each row may be distributed among left sub-row 113 and right sub-row 115. Character selection icons 108 distributed in left sub-row 113 may be selected by use of one of the UIDs 16 (for example, the left one); whereas character selection icons 108 distributed in right sub-row 115 may be selected by use of the other UID 16 (for example, the right one). Each character selection icon 108 corresponds to a finger portion 46 on UID 16. In a preferred embodiment, each sub-row comprises at least five character selection icons 108, each character selection icon corresponding to one of five finger portions 46 on one of the UIDs 16.

Additionally, each sub-row may be divided into a plurality of vertical clusters 111a-f of character selection icons 108. For example, as depicted in Fig. 7, left sub-row 113 comprises vertical clusters 111a-c and right sub-row 115 comprises vertical clusters 111d-f. Each vertical cluster may contain a plurality of character selection icons 108 with each character selection icon in the vertical cluster corresponding to one finger portion 46. Further, each vertical cluster of character selection icons 108 corresponds to a position of control portion 38 along the y-axis.

For example, vertical cluster 111e may correspond to the home position of the right hand UID, vertical cluster 111d may correspond to a left position along the y-direction, and vertical cluster 111f may correspond to a right position along the y-direction. Likewise, vertical cluster 111b may correspond to the home position of the left hand UID, vertical cluster 111a may correspond to a left position along the y-direction, and vertical cluster 111c may correspond to a right position along the y-direction.

Moreover, each character selection icon 108 may have a plurality of functions and characters associated therewith. For example, a character selection icon 108 for the letter t may be associated with a lower case t, an upper case T, an italicized *t*, a subscript ₜ, a superscript ^{t}, etc. The various characters associated with a particular character selection icon 108 may be selected by rotating control portion 38 through the various positions along arc θ. In this manner, in a preferred embodiment in which seven positions are provided along arc θ, each character selection icon 108 may be associated with seven characters.

For example, each sub-row may comprise eleven vertical clusters with each vertical cluster containing five or more character selection icons 108. Therefore, each sub-row may comprise up to 55 character selection icons 108 when using five finger portions 46 with eleven positions along the y-axis. Also, using eleven positions in the x-direction permits eleven rows of 55 character selection icons for a total of 605 character selection icons per UID. Moreover using rotational selection with rotational mechanism 92, eleven characters and functions may be associated with each character selection icon for a total of 6,655 characters and with two UIDs, that permits a user to be able to select 13,310 characters without requiring the user to remove his finger from UID 16 or remove his eyes from screen 14.

At all times, one of the sub-rows for each of the UIDs 16 is "active", one of the vertical clusters for each of the UIDs 16 is "active," and one character for each character selection icon 108 is "active." In other words, when a user depresses one of the finger portions 46, the active character for the character selection icon 108 corresponding to that finger portion 46 for the active sub-row and the active vertical cluster is selected. Correspondingly, a character or function associated with the character selection icon 108 is inputted because depression of one of the fmger positions 46 and the movement of control portion 38 into one of the x-direction and one of the y-direction positions provide impulses which cause UID signal generator 36 to signal those three values. Character presentation unit 26 interprets the signals and generates a command to input the character or function associated with the desired character selection icon 108.

To further illustrate an example of the interaction between UID 16, character selection graphic 106, UID signal generator 36, and character presentation unit 26 consider the characters presented in Fig. 7. The following table indicates the positions of the left and right UIDs 16 and which finger portion 46 may be used to select example character selection icons depicted in Fig. 7 according to one embodiment of the present invention.

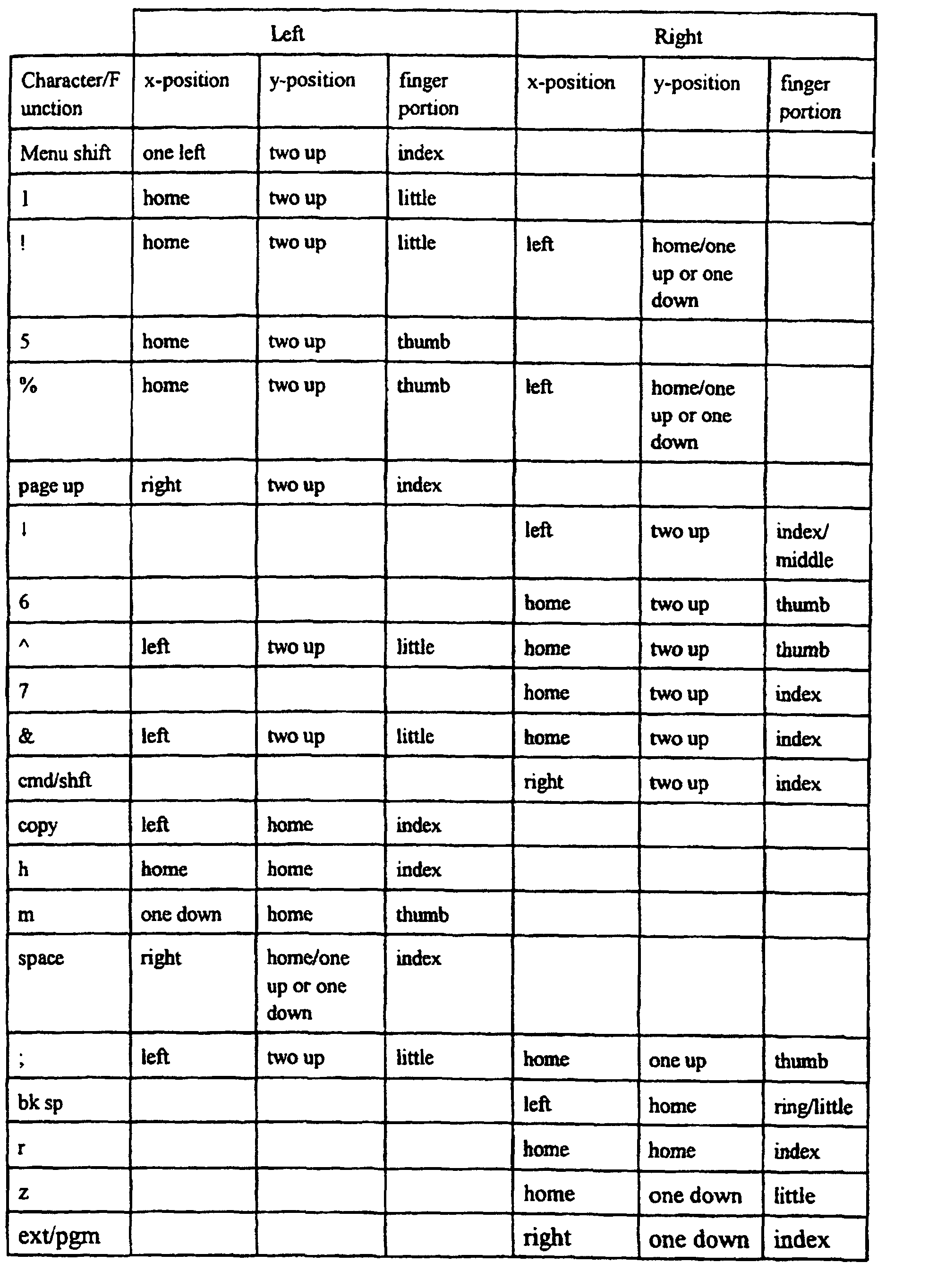

Each character selection icon thus corresponds to an x-direction position, a y-direction position and a finger portion on one of the UIDs. For example, therefore, when the user positions UID 16 of the left hand one position up in the y-direction and depresses the finger portion 46b under his index finger, UID interpretation unit 24 and character presentation unit 26 operate to determine that a letter d has been selected by the user. Character presentation unit 26 may comprise a look-up table corresponding the x-direction position, y-direction position, and finger portion of each of the UIDs to a character/function. Character presentation unit 26 may then receive a signal from UID interpretation unit 24 indicating the x-direction, y-direction, and finger portions and use those values as the index into the look up table. Upon determining the correct value from the look-up table, character presentation unit 26 may then generate a signal to operating system 16 indicating the character to be input or the function to be performed.

To assist a user in understanding the correspondence of certain finger portions with certain character selection icons, the sub-row and vertical cluster for each UID 16 which is "active" may be differentiated from the other sub-rows. For example, the character selection icons in the sub-row which is active may be highlighted with shading, different coloring, different fonts, different point sizes, raised appearance, etc. Further, as the user moves control portion 38 to various positions, the sub-row and vertical cluster corresponding to the new positions may become differentiated. Also, the character selection icon 108 may be differentiated depending on the character which is active. For example, if a bold g is active on the character selection icon 108, the letter g may be bolded in the icon. Other methods of displaying the active character or function may also be provided. Therefore, at all times, the user may be able to determine see what characters may be selected with the use of finger portions 46 by viewing character selection graphic 106 on screen 14.

Overall flow of operation by character presentation unit 26 according to one embodiment is depicted in Fig. 8. Character presentation unit 26 presents a character selection graphic 106 on display 14 (step 200). Character selection graphic 106 may be modified to meet a user's desired formatting requirements through an interface with character presentation unit 26. For example, rather than presenting eleven different vertical clusters, only one vertical cluster may be displayed at a time. In that example, character presentation unit 26 may present another vertical cluster upon indication that control portion 38 has been moved into a position corresponding to that vertical cluster.

Next, (step 202) character presentation unit 26 waits for detection of an input signal from UID signal generator 36. UID signal generator 36 generates signals indicative of depression of finger portions 46 (as indicated by electromechanical switches 104) and movement into various positions by control portion 38 by electrical indicators 102. When an input signal is detected, character presentation unit 26 determines whether the signal was from an electromechanical switch 104 or from an electrical indicator 102 (step 204). If the input was from an electromechanical switch 104, one of the buttons on one of the UIDs 16 has been depressed indicating a desire by the user to input a character.

As such, character presentation unit 26 determines the input parameter values from UID signal generator 36 to derive a value for which finger portion 46 was depressed and the three coordinate position of control portion 38 (step 206). Character presentation unit 26 then uses these values to determine the character or function which corresponds to those values as depicted in character selection graphic 106 (step 208). Character presentation unit 26 then cooperates with operating system 28 and task based components 30 to request input of the character or performance of the function requested by the user (step 210). Character presentation unit 26 then returns to step 202 to await a new input signal.

If character presentation unit 26 determines in step 204 that the signal is an electrical indicator 102 signal, then the user desires to switch either the sub-row, vertical cluster, or character. Therefore, in step 212, character presentation unit 26 determines the new sub-row, vertical cluster or character to be presented or differentiated in character selection graphic 106 and effects that change. Character presentation unit 26 then returns to step 202 to await a new input signal.

According to another embodiment of the present invention, each UID 16 may also be operable for movement of a cursor, i.e., in place of a mouse or joystick or other location identification device. Because UID 16 permits movement and signaling of movement in the x-direction, y-direction, and along arc θ, UID 16 functions similarly to a mouse and joystick. To indicate to character presentation unit 26 that the signals represent signals for movement of the cursor, an input selection mechanism 250, for example, as depicted in Fig. 9, may be provided. Input selection mechanism 250 may comprise a switch or other electrical signal generator and may be connected via wires 105 to UID signal generator 34. Character presentation unit 26 may then determine whether UID 16 is operating in character selection mode or cursor movement mode depending on whether the signal from input selection mechanism 250. Based on the signal, character presentation unit 26 may modify the character presentation graphic 106 according to movement of control portion 38 if the UID is in character selection mode or generate cursor movement signals is UID is in cursor movement mode. In this manner, UID 16 may provide all of the function of a keyboard, mouse, and joystick and thus is a universal input device.

Input selection mechanism 250 may also comprise a snapping mechanism 300 provided in the bottom of housing 56. In this embodiment, a user may select one of the two modes of operation by depressing control portion 38 into housing 56. By depressing control portion 38 again, the other mode of operation may be selected. An electrical connector 302 may be provided for signaling which mode of operation the user has selected. Snapping mechanism 300 may comprise any depression button mechanism as is commonly used in the electronics art. Snapping mechanism 300 may also comprise a toggle switch, detent, or the like.

According to yet another embodiment, the UIDs of the present invention may be implemented using a UID mouse 400 having five input buttons 402a-e as depicted in Fig. 11 (an overhead view). Also, a four input button UID mouse 400 may be provided. Other numbers of input buttons may also be used within the scope of the present invention.

Movement of UID mouse 400 and selection of input buttons 402a-e effects operation similarly to UIDs 16 with UID mouse 400 movements indicating sub-row and vertical cluster and input buttons 402a-e selecting the character within the sub-row and vertical cluster for each mouse. For more accuracy, as depicted in Fig. 12 (an underside view), for example, three mouse wheels 406, 408, and 410 may be provided such that three sensor signals per mouse may be provided.

Also, two UID mice 400 and 401 may be used in combination and rather than using mouse wheels to provide signals for positioning purposes, an electrical signal may be generated providing relative location of the two UID mice. By providing a signal indicating relative location of the two UID, accurate positional signals may be provided. Fig. 13 depicts one embodiment of the present invention in which two UID mice 400 and 401 are mechanically connected by a connector mechanism 412. Connector mechanism 412 may comprise a brace, strap, belt, or the like. A leveling sensor 414 may be provided for indicating relative location of the two UID mice 400 and 401. Leveling sensor 414 may be disposed within connector mechanism 412, for example. The relative location may then be used for repositioning a cursor or presenting different sub-rows or vertical clusters on character presentation graphic 106.

Also, a relative positional signal may be provided from communication devices 416 between UID mice 400 and 401. Communication devices 416 may comprise sound or light based signaling devices. For example, communication devices 416 may comprise a infrared signaling and sensors mechanism as depicted in Fig. 14. In Fig. 14, each UID mouse 400 and 401 is provided with an infrared signaling mechanism 418 and 419 and an infrared receiving mechanism 420 and 421. Infrared signaling mechanism 418 intermittently signals and infrared receiving mechanism 421 receives the signal. Likewise, infrared signaling mechanism 419 intermittently signals and infrared receiving mechanism 420 receives the signal. Infrared receiving mechanisms 420 and 421 then provide directional information indicating from which direction the signal was received. In this manner, relative location of the two UID mice may be derived. Also, a single infrared signaling mechanism and receiving mechanism may be used.

Other mechanisms for providing signals indicating relative location of the two UID mice may also be used. Essentially, by using relative location, a more accurate signal indicating the movement of the mouse may be provided because the mice are then not reliant on often variable conditions such as friction of the surface and weight placed on the mouse by the user and direction of origin, etc.

According to another embodiment of the present invention, UID 16 may comprise adjustable finger portions. Fig. 16 depicts another embodiment of a UID mouse 400 having a infrared signaling and sensing mechanism. Finger portions 46 may be disposed an a finger portion bar 600 which is attached to control portion 38 be one or more support portions 602. Finger portion bar 600 may be adjustable in three directions so as to move it closer or farther away from control portion 38, up or down, or left or right to suit a user's particular comfort level. Thumb portion 46a may be disposed on control portion 38 or on a separate bar attached to control portion 38. Also, another button or portion 604 may also be provided for activating or deactivating a rotation mechanism 100.

Another embodiment of the invention is shown in Fig. 17. Control portion 172 is provided and universally connected to base 174. Base 174 may include suction cups (not shown) to facilitate the mounting of UID 170 to a table or the like. Control portion 172 is universally mounted to base 174. In a preferred embodiment, this is accomplished through two gimbals and a rotational mechanism. Control portion 172 comprises four input keys 176a-d. Input keys 176a-d may be computer keys. In a preferred embodiment, input keys 176a-d are the long "SHIFT" keys on the lower right side of a standard keyboard. Each key may be assigned to a finger. For example, key 176a may be assigned the index finger, 176b the middle finger, 176c the ring finger, and 176d the pinky. Key 176e may be provided for the thumb. Key 176e may be a button, a key, or any other suitable input means.

Different types of sliders 176f may be provided. Referring to Figs 18a and b, In one embodiment, the slider may be moved in the x-direction. Slider 186f may have two positions, 186f₁ and 186f₂. Slider 186f may be a two-position switch or a similar device. In another embodiment, shown in Fig. 18b, slider 196f may also have a plurality of positions in the x-direction, indicated as 196f₁, 196f₂, ... 196fₙ. Slider 196f may be a multi-position switch, a potentiometer, or a similar device. In another embodiment, slider 176f may operate like a joystick, providing a plurality of directions and a plurality of positions along those directions. Referring to Fig. 18c, in a preferred embodiment, slider 199f is provided with four directions of motion (199f₂, 199f₃, and 199f₄, 199f₅), and each direction has one position. Thus, including the home position, 199f₁, the slider of Fig. 18c provides a total of five positions. In still another embodiment, a trackball mechanism may be used for slider 176f.

Slider 176f may be operated by the index finger of each hand. In operation, slider 176f may provide the user to access other options, such as macros. Further, slider 176f may be used to run file management and applications operations.

In an alternate embodiment, slider 176f may be provided as part of key 176a. This will allow the user to use slider 176f functions without having to move the index finger from key 176a.

Control portion 172 can move two-dimensionally with respect to base 174. In a preferred embodiment, control portion 172 may move in the positive and negative x-directions. Further, control portion 172 may also move in the positive and negative y-directions. Additionally, control portion 172 may also be twisted relative to base 174 in the θ direction. The total number of positions in each direction (x, y, and θ) may be eleven- five in each direction, and a home position. The actual number of positions may vary based on the specific needs of the user. Other numbers of positions may be provided.

Referring to Figs. 19 and 20, another embodiment of UID 170 is given. Slider 176g is provided and functions as a combination of button 176e and slider 176f shown in Fig. 17. Referring to Fig. 20, slider 176g may be moved in the x and z-directions, and may be depressed in the negative y-direction. Slider 176f may also be provided in other keys 176a-d.

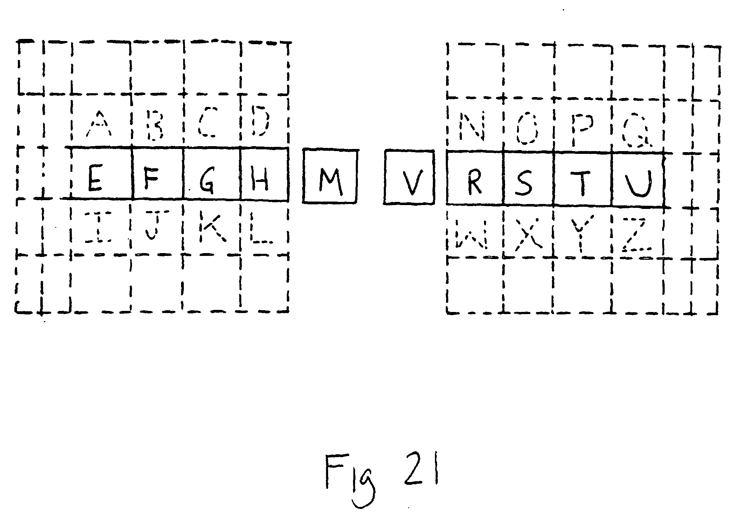

Without using slider 176f or 176g, the user has the two-dimensional matrix shown in Fig. 21 at his or her command. In one embodiment, the keyboard layout may be similar to that of a standard keyboard. In another embodiment, such as that shown in Fig. 21, the standard keyboard layout has been replaced with a ABCD RSTU layout. Without twisting control portion 172 in the θ direction, each finger corresponds to a key in the matrix. For example, letters E, F, G, and H would correspond to the pinky, ring, middle, and index fingers of the left hand, while R, S, T, and U would correspond to the index, middle, ring, and pinky of the right hand. M would correspond to the left thumb and V would correspond to the right thumb. The letters or characters to the left of E and the right of U may be accessed by sliding in the y-direction. Further, other font types may be achieved by twisting control portion 172 in the θ-direction. Letters or characters above and below the "home row," or that row that is active and shown as solid, may be accessed by moving control portion 172 in the x-direction.

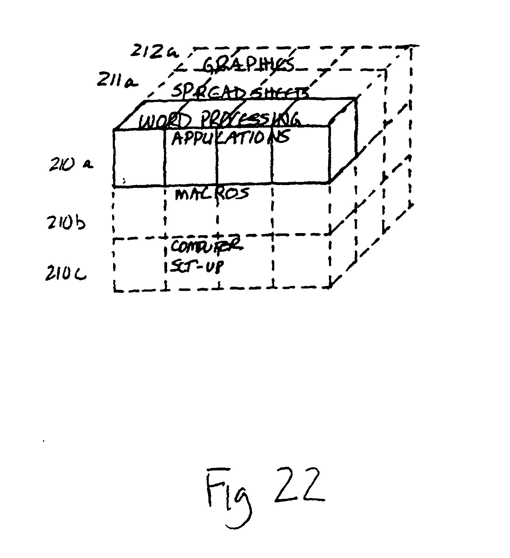

When slider 176e is used, the two-dimensional matrix of Fig. 22 is changed to a three-dimensional matrix, shown in Fig. 23. For the sake of convenience, only three rows of the three-dimensional matrix in Fig. 23 are drawn; the number of rows may be many more. Blocks 210 - 212 are given, and each is assigned a particular genre of programs. For instance, block 210a includes word processors, while block 211 includes spreadsheets. The blocks are selectable using slider 176f or 176g. Once slider 176f or 176g selects a block, keys 176a-e may be used to enter data.

In a preferred embodiment, the user has the ability to define the function of keys 176a-e and slider 176f or 176g according to his or her preference. Thus, each key and slider may be individually programmed in order to maximize the performance and efficiency of the system.

The position of keys 176a-e and slider 176f or 176g may be adjustable to the particular user. Adjustment of these elements may be required to compensate for the size of the user's hands, the user's experience, the user's fatigue, etc. Thus, keys 176a-d may slide in the x-direction, key 176e may move in the x-direction or the z-direction, and slider 176f may move in the x-direction. If slider 176g is provided, it may move in the x or z-directions, similar to key 176e.

A preferred embodiment of the invention provides over 13,000 totally intuitive single-finger commands. For example, there are ten keys that may be depressed to enter data. There are eleven positions in the x-direction, eleven positions in the y-direction, and eleven positions in the θ direction. Thus, using these combinations of movements, there are 13,310 totally intuitive single-finger commands are available. Further, when slider 176e is moved in the x or z direction, providing four additionally positions, a total of 53,240 totally intuitive commands are available.

## Claims

1. An input device for generating signals indicating input requests by a user, the device comprising:
a base portion (40);
a control portion (38);
a plurality of input means (46) disposed on said control portion (38) for permitting a user to input a request;
a universal connection means (54) for connecting said control portion to said base portion and for permitting a user to move said control portion universally with respect to the base portion;
and
a signal generating means, operatively connected to the plurality of input means and the universal connection means, for generating a first plurality of signals indicating a position of the control portion and for generating a second plurality of signals indicating user data input requests; and the input device further **characterised by**
an input selection mechanism for permitting a user to operate said input device in a character selection mode or a cursor movement mode.

2. The input device of claim 1, wherein the plurality of input means comprises five keys (46) which may be depressed by a user.

3. The input device of claim 2, wherein the plurality of input means further comprises at least one slider (196), said at least one slider having a plurality of positions.

4. The input device of claim 3, wherein said at least one slider is selected from the group consisting of a joystick and a trackball.

5. The input device of claim 1, wherein the universal connection means is selected from the group consisting of gimbal mechanism and a track ball mechanism.

6. The input device of claim 1, wherein the control portion further comprises a palm portion for receiving the palm of a users hand, the palm portion being disposed substantially parallel to the base portion.

7. The input device of claim 1, further comprising a rotational mechanism which permits a user to rotate the control portion with respect to the base portion, wherein the signal generating means is operatively connected to the rotational mechanism and generates a signal indicating rotational position of the control portion with respect to the base portion.

8. The input device of claim 1, wherein said input means are disposed on said control means in an ergonomically pleasing fashion.

9. The input device of claim 1, wherein said control portion can be moved in an x-direction and a y-direction, and can be rotated in relation to said base portion.

10. The input device as claimed in claim 2, wherein at least one of the keys is a multi-position switch.

11. A computer in combination with an input device as claimed in claim 1.

## Patentansprüche

1. Eingabevorrichtung zum Erzeugen von Signalen, die für Eingabeanforderungen durch einen Benutzer charakteristisch sind, wobei die Vorrichtung umfaßt:
ein Basisteil (40),
ein Bedienteil (38),
eine Vielzahl an dem Bedienteil (38) angeordneter Eingabemittel (46) zum Ermöglichen, daß ein Benutzer eine Anforderung eingeben kann,
ein universelles Verbindungsmittel (54) zum Verbinden des Bedienteils mit dem Basisteil und zum Ermöglichen, daß ein Benutzer das Bedienteil in Bezug auf das Basisteil universell bewegen kann,
und
ein mit der Vielzahl von Eingabemitteln und dem universellen Verbindungsmittel funktionell verbundenes Signalerzeugungsmittel zum Erzeugen einer ersten Vielzahl von Signalen, die für eine Position des Bedienteils charakteristisch sind, und zum Erzeugen einer zweiten Vielzahl von Signalen, die für Benutzerdaten-Eingabeanforderungen charakteristisch sind, und wobei die Eingabevorrichtung ferner **gekennzeichnet ist durch**
einen Eingabeauswahlmechanismus zum Ermöglichen, daß ein Benutzer die Eingabevorrichtung in einer Zeichenauswahlbetriebsart oder einer Cursorbewegungsbetriebsart betreibt.

2. Eingabevorrichtung nach Anspruch 1, bei der die Vielzahl von Eingabemitteln fünf Tasten (46) aufweist, die durch einen Benutzer niedergedrückt werden können.

3. Eingabevorrichtung nach Anspruch 2, bei der die Vielzahl von Eingabemitteln ferner mindestens einen Schieber (196) aufweist, der eine Vielzahl von Positionen hat.

4. Eingabevorrichtung nach Anspruch 3, bei der der mindestens eine Schieber aus der aus einem Joystick und einem Trackball bestehenden Gruppe ausgewählt ist.

5. Eingabevorrichtung nach Anspruch 1, bei der das universelle Verbindungsmittel aus der aus einem Kardanmechanismus und einem Trackballmechanismus bestehenden Gruppe ausgewählt ist.

6. Eingabevorrichtung nach Anspruch 1, bei der das Bedienteil ferner einen Handflächenabschnitt zum Aufnehmen der Handfläche der Hand eines Benutzers aufweist, wobei der Handflächenabschnitt im Wesentlichen parallel zu dem Basisteil angeordnet ist.

7. Eingabevorrichtung nach Anspruch 1, die ferner einen Drehmechanismus aufweist, der es einem Benutzer erlaubt, das Bedienteil in Bezug auf das Basisteil zu drehen, wobei das Signalerzeugungsmittel funktionell mit dem Drehmechanismus verbunden ist und ein Signal erzeugt, das für die Drehposition des Bedienteils in Bezug auf das Basisteil charakteristisch ist.

8. Eingabevorrichtung nach Anspruch 1, bei der die Eingabemittel an dem Bedienmittel in einer ergonomisch angenehmen Weise angeordnet sind.

9. Eingabevorrichtung nach Anspruch 1, bei der das Bedienteil in eine x-Richtung und eine y-Richtung bewegt werden kann und in Bezug auf das Basisteil gedreht werden kann.

10. Eingabevorrichtung nach Anspruch 2, bei der mindestens eine der Tasten ein Vielpositionenschalter ist.

11. Computer in Kombination mit einer Eingabevorrichtung nach Anspruch 1.

## Revendications

1. Dispositif de saisie pour générer des signaux indiquant des requêtes de saisie provenant d'un utilisateur, le dispositif comprenant :
une partie de base (40)
une partie de commande (38)
une pluralité de moyens de saisie (46) disposée sur ladite partie de commande (38) pour permettre à un utilisateur de saisir une requête ;
des moyens de raccordement universels (54) pour relier ladite partie de commande à ladite partie de base et pour permettre à l'utilisateur de déplacer ladite partie de commande de manière universelle par rapport à la partie de base ; et
des moyens de génération de signaux, reliés de manière fonctionnelle à la pluralité de moyens de saisie et aux moyens de raccordement universels, pour générer une première pluralité de signaux indiquant une position de la partie de commande et pour générer une seconde pluralité de signaux indiquant les requêtes de saisie de données de l'utilisateur ; et le dispositif de saisie étant en outre **caractérisé par** :
un mécanisme de sélection de saisie pour permettre à un utilisateur de faire fonctionner ledit dispositif de saisie dans un mode de sélection de caractères ou un mode de déplacement de curseur.

2. Dispositif de saisie selon la revendication 1, dans lequel la pluralité de moyens de saisie comprend cinq touches (46) qui peuvent être enfoncées par un utilisateur.

3. Dispositif de saisie selon la revendication 2, dans lequel la pluralité de moyens de saisie comprend en outre au moins un curseur (196), ledit au moins un curseur présentant une pluralité de positions.

4. Dispositif de saisie selon la revendication 3, dans lequel ledit au moins un curseur est choisi dans le groupe constitué par une manette de commande et une boule de commande.

5. Dispositif de saisie selon la revendication 1, dans lequel les moyens de raccordement universels sont sélectionnés dans le groupe constitué par un mécanisme de cardan et un mécanisme de boule de commande.

6. Dispositif de saisie selon la revendication 1, dans lequel la partie de commande comprend en outre une partie palmaire pour recevoir la paume de la main d'un utilisateur, la partie palmaire étant disposée sensiblement parallèlement à la partie de base.

7. Dispositif de saisie selon la revendication 1, comprenant en outre un mécanisme rotatif qui permet à un utilisateur de pivoter la partie de commande par rapport à la partie de base, dans lequel les moyens de génération de signaux sont reliés de manière opérationnelle au mécanisme rotatif et génèrent un signal indiquant la position en rotation de la partie de commande par rapport à la partie de base.

8. Dispositif de saisie selon la revendication 1, dans lequel lesdits moyens de saisie sont disposés sur lesdits moyens de commande d'une manière ergonomiquement agréable.

9. Dispositif de saisie selon la revendication 1, dans lequel ladite partie de contrôle peut être déplacée dans une direction x et dans une direction y et peut être pivotée par rapport à ladite partie de base.

10. Dispositif de saisie selon la revendication 2, dans lequel au moins une des touches est un commutateur à positions multiples.

11. Ordinateur en combinaison avec un dispositif de saisie selon la revendication 1.
